# EUROPEAN PATENT SPECIFICATION

(11) **EP 2 093 572 B1**
(45) Date of publication and mention of the grant of the patent: **07.12.2011**
(21) Application number: 09159456.4
(22) Date of filing: 01.09.2005
(51) Int. Cl.: G01N 35/00, B01L 99/00, G01N 35/10, B08B 3/12

(54) **Plate washing system utilising ultrasonic cleaning for pipes**
Geschirrwaschsystem mit Ultraschallreinigung für Leitungen
Système de lavage d'assiettes utilisant un nettoyage ultrasonique des tuyaux

(30) Priority: 19.07.2005 US 183867; 14.09.2004 US 939467
(43) Date of publication of application: 26.08.2009
(62) Divisional of application: 05255351.8
(73) Proprietor: BTI Holdings, Inc., Winooski, VT 05404-0998 (US)
(72) Inventor: Buehrer, Lenore, Burlington, VT 05401 (US); Cleveland, Thomas. A, Colchester, VT 05446 (US); Gifford, Robert M., Starksboro, VT 05489 (US)
(74) Representative: Driver, Virginia Rozanne

(56) References cited:
- JP-A- 9 021 730
- JP-A- 11 304 779
- JP-A- 2001 170 538
- US-A- 5 951 783
- PATENT ABSTRACTS OF JAPAN vol. 014, no. 001 (P-985), 8 January 1990 (1990-01-08) & JP 01 254871 A (TOSOH CORP), 11 October 1989 (1989-10-11)

## Description

This invention generally relates to a plate washing system with ultrasonic cleaning of pipes. The ultrasonic cleaning system can provide cleaning of the plate washing system's dispense and aspirate pipes, and monitor the performance in terms of volumetric accuracy (dispense) and aspiration efficiency.

Certain laboratory operations, such as immuno assays, require the testing of small samples which are carried out in an arrangement of microwells or wells having volumes of, for example, 50-300 microliters or less formed in microtiter plates, hereinafter referred to generically as well plates. An example of this type of laboratory operation is an enzyme linked immunosorbent assay ("ELISA") reaction which is performed for measuring the presence or absence of an antigens/ antibodycomplex formed within the wells of the well plate.

Reactions of this type involve the adding and removing of liquid reagents within each well. Intentionally, some of the components in the reagent chemically bond to the well. Therefore, at several stages of the reactions, the unbound liquid and components remaining in the wells must be removed and the inside of the wells must be washed by dispensing a wash solution such as water, a buffer solution, or other fluid in the wells using a gravity feed or a pump, and then evacuating the liquid under a vacuum.

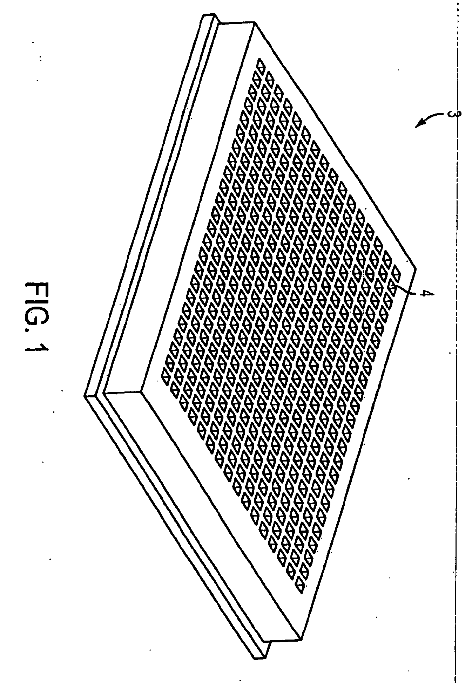

The wells can be arranged in a strip or in-line format, or can be arranged in a matrix format. Until recently, commonly used matrices were configured to have 8 x 12 wells spaced at 9 mm apart between centers, hereinafter referred to as a 96-well plate. However, with the advert ' , of high throughput screening ("HTS"), two more matrixes were introduced which increased the total number of wells while keeping the overall size of the well plate the same: 1) the 384-well plate 3, as shown in FIG. 1, configured to have 16 x 24 wells 4 spaced at 4.5 mm apart between centers, and 2) the 1536-well plate configured to have 32 x 48 wells spaced at 2.25 mm apart between centers (not shown). Since the overall foot print of these new well plates are the same as the 96-well plate, the size of the wells in the new microtiter well plates is necessarily smaller than those in the 96-well plates while the depth of the wells remains generally the same. However, this is not always the case.

A conventional washer used for removing the unbound contents in wells of a well plate includes dispense pipes for dispensing the wash solution into the wells of the well plate (e.g., by a pump or gravity feed), and aspirate pipes for evacuating the solution from the wells of the well plate (e.g., by a vacuum or a suction device). In order to quickly wash the well plates, the washing process is performed simultaneously on as many wells of the well plate as possible. A commercial example of such a microplate washer is the Tecan PW384.

As discussed in U.S. Patent No. 5,951,783 issued to Kontorovich et al., the dispense and aspirate pipes can be provided on a single manifold assembly or separate dispense and aspirate manifolds.

In order to accommodate the well plates having smaller wells, the dispense and aspirate pipes must have small diameters. However, as a result of evaporation, the dispensed materials leave solid materials (such as salts from the assay reagents) within the pipes. The solid material residue can impact the performance of the pipes or even render the pipes inoperable. Impact on performance issues is currently not detectable within the Microplate washing system and requires external instrumentation to detect volumetric dispense and aspiration errors.

Ultrasonic cleaning techniques have been used to remove the residual material from the aspirate and dispense pipes and return the pipes to an operative condition. These ultrasonic cleaning techniques use a commercially available ultrasonic tank of suitable size to allow immersion of the impaired pipe assemblies.

Although the use of ultrasonic cleaning is effective, ultrasonic cleaning using a commercially available tank is a complex process. It requires the addition of cleaning liquid in order to fill the tank, disassembly of the pipe assemblies from the microtiter plate washing system before the pipe assembly is inserted into the tank, and removal of the waste material once the cleaning process has been completed.

It is, therefore, desirable to provide a plate washing system having an ultrasonic cleaning system that simplifies the cleaning process and is able to verify function.

According to one aspect of the invention, there is provided a plate washing system as set out in claim 1.

According to another aspect of the invention, there is provided a method of cleaning pipes of a plate washing system as set out in claim 2.

According to an embodiment of the invention, a method of verification where a system can detect levels of fluid in the microplate wells to verify function via single or multiple level sensing probes.

This application is a divisional of European Application No. 05255351.8.

The advantages, nature and various additional features of the invention will appear more fully upon consideration of the illustrative embodiment of the invention which is schematically set forth in the drawings, in which:
FIG. 1 is a perspective view of a conventional titer plate having 384 wells arranged in a 16 x 24 matrix;
FIG. 2 is a schematic drawing of an embodiment of the system for cleaning a well plate washing system's dispense and aspirate pipes by using ultrasonic vibrations;
FIG. 3 is a schematic of a first embodiment of the well plate washing system;
FIG. 4 is a schematic of a second embodiment of the well plate washing system in which multiple cleaning solutions are used;
FIG. 5 is a schematic of a third embodiment of the well plate washing system having tank fill and aspirate ports; and
FIGs. 6A and 6B illustrate the use of level sensing technology to determine volumetric or aspirate function of each well.

While the invention is open to various modifications and alternative forms, specific embodiments thereof are shown by way of examples in the drawings and are described herein in detail. There is no intent to limit the invention to the particular forms disclosed.

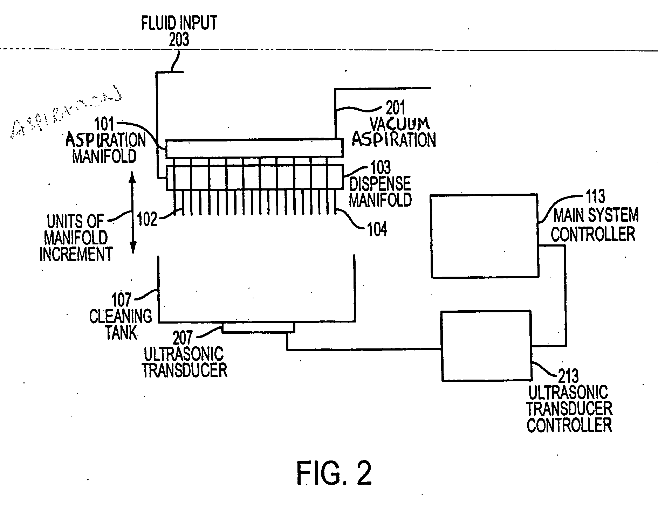

FIG. 2 generally shows a first non-limiting embodiment of an ultrasonic cleaning system of a plate washing system. The ultrasonic cleaning system includes a dispense manifold 103 having dispense pipes 102, an aspiration manifold 101 having aspirate pipes 104, a fluid input line 203, a vacuum aspiration line 201, a cleaning tank 107, and an ultrasonic transducer 207 mounted on the tank 107. However, the invention is not limited to separate dispense and aspiration manifolds and a single manifold containing both aspirate and dispense pipes can also be used.

In order to clean the pipes, the dispense and aspiration manifolds 103, 101 are lowered so that the pipes 102, 104 are within the cleaning tank 107. However, the invention is not limited in this respect. For example, instead the tank 107 could be raised to the level of the pipes 102, 104.

Then, a fluid is introduced into the cleaning tank 107 by the dispense pipes 102 in order to fill the tank 107 with fluid. This fluid can be, for example, a mild detergent or de-ionized water, as is discussed in detail below. However, the invention is not limited by the type of fluid.

The aspiration manifold 103 either draws the fluid from the tank 107 into the aspirate pipes 104 or vents the aspirate pipes 102 to atmospheric pressure. Either way, the aspirate pipes 104 can be filled with the fluid in the tank.

Once the tank 107 and pipes 102, 104 are filled with fluid, the ultrasonic transducer 207 is activated, or energized, causing the fluid in the tank 107 to vibrate. Since the tips of the pipes 102, 104 are submerged in the fluid, the vibration allows the fluid to fill and clean the dispense and aspirate pipes 102, 104. Once the cleaning has taken place, the aspirate pipes 104 are used to evacuate the cleaning tank 107.

A control system, including a main system controller 113 and ultrasonic transducer controller 213, automatically controls the movement of the pipes 102, 104, the dispensing of the fluid into the tank 107, the activation of the ultrasonic transducer 207, and the evacuation of the tank 107. However, the invention is not limited in this respect and additional controllers or a single controller could also be used.

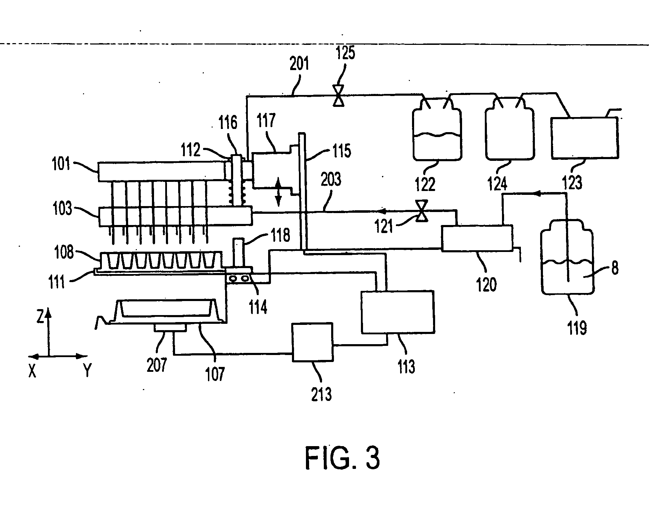

Thus far, the discussion has been directed to the ultrasonic cleaning of the dispensing and aspirate pipes. FIG. 3 shows additional features of a non-limiting embodiment of the overall system for washing a microtiter well plate. In addition, a non-limiting method of cleaning a microtiter well plate, will be described below with respect to the microtiter plate washing system shown in FIG. 3.

A microtiter well plate 108 is positioned on a well plate support mechanism or carrier 111 which in turn is moved into a washing position by the support mechanism positioning system 114 connected to the main system controller 113. However, the invention is not limited by the type of support 111. The support mechanism positioning system is also used to index the support plate in the horizontal X-Y plane relative to the manifolds during a washing operation as required. Alternatively, a drive mechanism for moving the top manifold 101 and bottom manifold 103 in the X-Y plane can be used to achieve the desired relative motion during a wash operation.

In accordance with this embodiment, the bottom manifold 103 is the dispense manifold, which is slaved to the top aspirate manifold 101. However, the invention is not limited in this respect. The aspirate manifold 101 is lowered and raised along the linear guide way 115 along the z-axis by a driving mechanism 117 connected to the main system controller 113. The dispense manifold 103 is suspended from the aspirate manifold 101 by a linear guide 116 and stopped from descending beyond a predetermined position relative to top manifold by a first stop 112. Furthermore, a second stop 118 is provided on the support mechanism 111 for preventing the dispense manifold 103 from entering into the small wells during a wash operation as the aspirate manifold 101 is lowered to evacuate the wells. In order to clean the wells, a wash solution 8 is delivered into the dispense manifold from a source container 119 by means of a pump 120 and a valve 121 through the fluid input line 203. The wash solution 8 is removed from the aspirate manifold 101 through the vacuum aspiration line 201 into a waste container 122 which is separated from a vacuum pump 123 by a trap 124. An opening valve 125 connects the aspirate manifold 101 to the waste container.

When it is desired to clean the aspirate and dispense pipes 102, 104, the support mechanism 111 and second stop 118 are moved out of the way and placed in a home position. The main system controller 113 then lowers the top manifold 101 and bottom manifold 103, allowing their respective pipes to be lowered into the cleaning tank 107. Once the pipes 102, 104 are in position, the dispense pipes 102 provide a fluid to the tank 107, and the pipes 102, 104 are cleaned by the ultrasonic vibrations of the fluid within the tank 107, as is discussed in detail above with respect to FIG. 2.

In the pictured embodiment, the ultrasonic transducer 207 is mounted to the cleaning tank 107 with adhesive. However, the invention is not limited in this respect. For example, the transducer 207 can be mechanically attached to the cleaning tank 107 with a threaded attachment.

The ultrasonic transducer 207 includes a ceramic material that changes dimensions due to the piezoelectric effect when a voltage is applied to the ceramic material. When an alternating voltage at a frequency is applied to the ceramic material, the ceramic material vibrates at that frequency. If the transducer 207 is bonded to the tank 107 filled with liquid, the tank 107 also vibrates and the energy of vibration of the tank 107 can cause small bubbles to form and collapse throughout the liquid. The action of the bubbles collapsing (i.e., cavitation) provides cleaning of the tips of the pipes 102, 104 within the fluid.

In accordance with the first embodiment of the present invention, the main system controller 113 and ultrasonic transducer controller 213 automatically control the cleaning of the ultrasonic transducer 207 in accordance with a pre-programmed cleaning cycle. That is, the controllers 113, 213 can control the times when the pipes 104, 102 are cleaned and can control the duration of soaking of the pipes 104, 102.

For example, the ultrasonic transducer controller 213 or main system controller 113 controls the processes of filling the tank 107, lowing the manifolds 101, 103 (or single manifold), turning on the ultrasonic transducer 207, and evacuating the tank 107. In addition, the controllers 113, 213 can control whether this cleaning cycle is repeated and can control when the cleaning cycles occur.

Furthermore, the controllers 113, 213 can control fluid changes. For example, according to a preferred embodiment of the invention, the pipes 102, 104 are cleaned with a mild detergent and then rinsed with de-ionized water (DiH2O). First, the pipes are cleaned with the detergent, which reduces the surface tension in the water. This reduced surface tension increases cavitation and, as such, provides more cleaning action. Then, the pipes are rinsed with DiH2O.

According to the first embodiment, a single source container 119 is used for the well wash solution, detergent, and DiH2O. Therefore, whenever a change of the fluid within the source is required, the controllers 113, 213 cause a notification to be provided an operator.

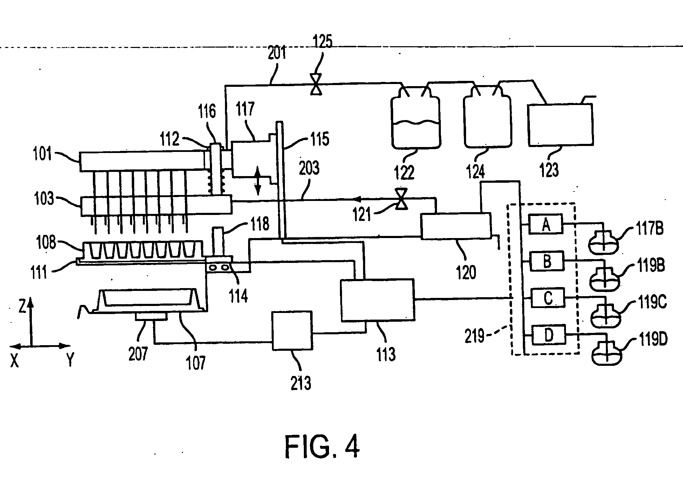

Alternatively, according to a second non-limiting embodiment shown in FIG. 4, an external valve box 219 can be used. This valve box includes valves A-D, which are connected to multiple source containers 219A-D. If multiple source containers are used, then the controllers 113, 213 also control the dispensation of the appropriate fluid (e.g., well wash solution, detergent, or DiH2O).

In addition, the ultrasonic transducer controller 213 can control the voltage and frequency of the applied ultrasonic voltage. It is preferred that the applied voltage is 30 to 300V with a frequency of 40-100 kHz. For example, according to one design, the ultrasonic controller 213 uses 48 VDC and creates an ultrasonic signal at the transducer of ±300V at 50 kHZ. However, the invention is not limited in this respect.

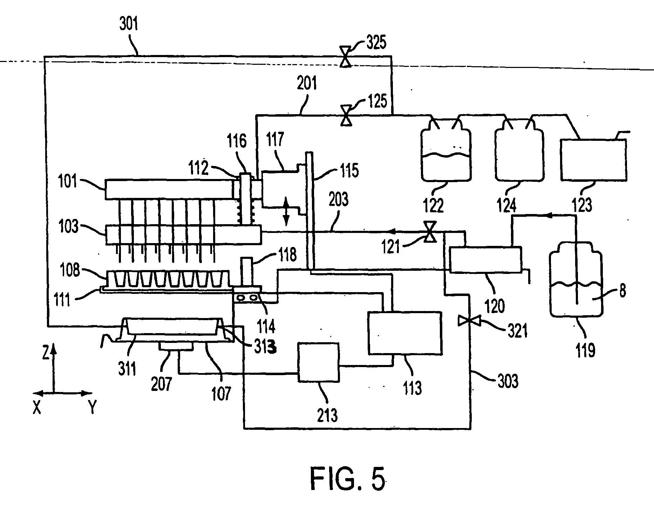

Finally, according to a third non-limiting embodiment shown in FIG. 5, the fluids used for cleaning of the tubes (e.g., detergent and DiH2O) can be introduced to and evacuated from the tank 107 through ports 313, 311. Dispense and aspirate lines 303, 301, with valves 321, 325, provide the appropriate fluid from the source container (e.g., 119 or one of 119A-D). Again, the controllers 113, 213 can control the dispensation and evacuation of fluid.

According to another non-limiting embodiment of the invention, the relative depths of fluid within the wells 4 of the microplate 3 are sensed in order to monitor whether the dispense or aspirate operations can are functioning properly. The sensing of proper functioning of the dispense or aspirate operations can be applied manually at the operator's discretion, or can be part of a maintenance operation in which the plate washer automatically performs a cleaning operation of the aspirate and/or dispensing pipes 102, 104 until the desired performance is achieved. Non-limiting examples of liquid level sense technology that can be used to determine volumetric performance issues on board the micro plate washing system are capacitive, ultrasonic, optical or direct contact measurement.

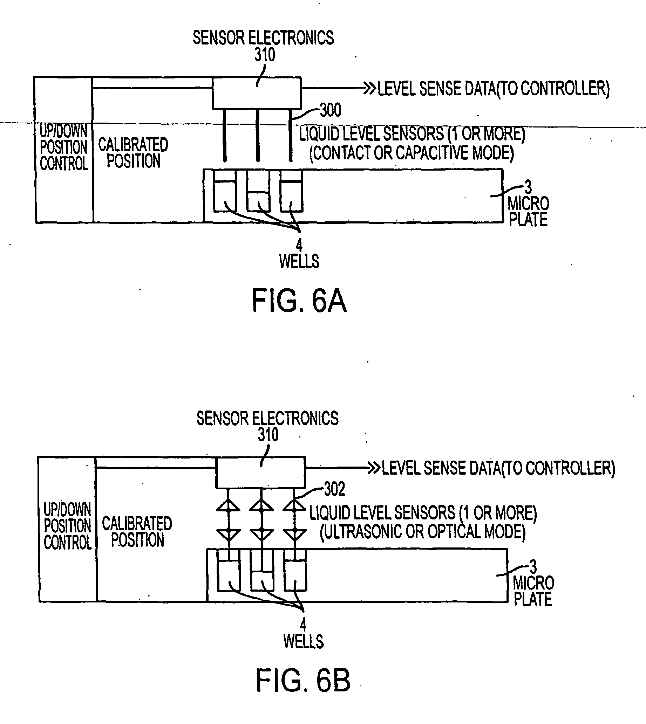

FIGs. 6A and 6B illustrate the use of level sensing system that determines volumetric or aspirate function of the wells 4. The level sensing system can include at least one sensing probe 300 or transducer 302 that determines a level of fluid within one or more of the wells 4 and sensor electronics 310 that determine if volumetric function has been impaired based on the sensed level of fluid. By ascertaining the volumetric content of a well 3 using the individual sensing probes 300 or transducers 302, an impaired dispense pipe 102 or aspirate pipe 104 can be detected.

FIG. 6A illustrates a contact or capacitive sensing probe 300. At least one probe 300 is lowered from a calibrated position to a measurement position where the liquid level within the wells 3 is detected. The one or more probes 300 can be moved to detect the level other wells 3. For example, the one or more probes 300 can be moved so that it is used in adjacent wells 3, allowing the one or more probes 300 to check an entire micro plate matrix. More than one axis of motion is required to accomplish this function. For example, the probes 300 could be in one axis, e.g., moved up and down, and the plate 4 could be moved in the X and Y directions in order to position the one or more probes 300 at the locations for sensing the liquid level in the various wells 3.

FIG. 6B illustrates an optical or ultrasonic sensing transducer 302. Using the optical or ultrasonic transducer 302 is similar to that of using the probes 300 shown in FIG. 6A. However, the at least one transducer 302 can be lowered from a calibrated position to a measurement position or can remain at a fixed position where the liquid level within the wells 3 is detected.

Sensor electronics 310 can automatically or manually enable cleaning of at least one of the pipes 102, 104 until volumetric function has been restored via repeated processes. Moreover, the sensor electronics 310 can provide a microplate washing process that includes a background task of volumetric verification where a designated zone of said plate is set aside for the purpose of testing volumetric function, or the sensor electronics can provide volumetric function as a maintenance operation aside from normal operations.

It is of course understood that departures can be made from the preferred embodiment of the invention by those of ordinary skill in the art without departing from the scope of the invention that is limited only by the following claims. For example, the invention is not limited to the specific structures and processes discussed above.

## Claims

1. A plate washing system for washing the wells of a plate, comprising: a well plate support (111) mechanism having a washing position;
a manifold (103) having a plurality of pipes (102) configured, in use, to be provided within wells of a plate in order to wash the wells;
a tank (107) that is capable of being filled with a fluid located below the well plate support mechanism in the washing position; and
means for moving at least one of the manifold and tank to position the tips of the plurality of pipes within the tank;
a support mechanism positioning system (114) for moving the support mechanism (111) from the washing position out of the way to allow the pipes to be lowered or the tank to be raised to position the tips of the pipes within the tank;
an ultrasonic transducer (207) mounted to the tank; and
a control system (113), operative when the support mechanism is out of the way to lower the manifold or raise the tank, to dispense the fluid into the tank and when tips of said plurality of pipes are submerged in the fluid to activate the ultrasonic transducer in order to vibrate the fluid within the tank.

2. The method of cleaning pipes of a plate washing system, comprising:
providing the washing system having at least one manifold having a plurality of pipes configured, in use, to be provided within wells of a plate in order to wash the wells, a tank, an ultrasonic transducer mounted to the tank, and a control system;
washing the wells of the plate with the plate supported by a well plate support mechanism in a washing position with the tank located below the well plate support mechanism;
moving the plate from the washing position out of the way using a support mechanism positioning system to allows the pipes to be lowered or the tank to be raised to position the tips of the pipes within the tank; with the support mechanism out of the way, the control system lowering the at least one manifold or raising the tank so that tips of the plurality of pipes are positioned within the tank;
filling the tank with a fluid; and
activating the ultrasonic transducer in order to vibrate the fluid within the tank;

3. The system of claim 1 or method of claim 2, wherein the manifold is a dispense manifold (102) having a plurality of dispense pipes (102) for providing a wash solution (8) to wash the wells.

4. The system of claim 1 or method of claim 2, wherein the control system automatically controls movement of at least one of the at least one manifold and the tank so that the plurality of pipes are positioned within the tank, and automatically activates the ultrasonic transducer in order to vibrate the fluid within the tank.

5. The system or method of claim 4, wherein said plate is a microtiter plate.

6. The system of claim 1 or method of claim 2, wherein said plurality of pipes includes a plurality of dispense pipes (102), wherein said control system controls the dispense pipes so that the dispense pipes dispense the fluid within the tank.

7. The system or method of claim 6, wherein the plurality of pipes further include a plurality of aspirate pipes (104) so that the aspirate pipes evacuate the fluid from the tank.

8. The system of claim 1 or method of claim 2, wherein the control system is programmed to control, preferably automatically, at least one of the following operations: fluid changes, the duration of soaking of the pipes and the times when the pipes are cleaned.

9. The system of claim 1 or method of claim 2, wherein when the ultrasonic transducer is activated, a voltage of amplitude and frequency is applied to the ultrasonic transducer so as to vibrate the tank and cause small bubbles to form and collapse throughout the fluid thereby cleaning the pipes.

10. The system or method of claim 9, wherein the applied voltage is 30-300 Volts and has a frequency of 40-100 kHz.

11. The system or method of claim 7, wherein the control system is programmed to control, preferably automatically, evacuation of the tank.

12. The system or method of claim 11, wherein said tank includes a fill port and an aspirate port, said fluid being introduced into the tank through the fill port and said fluid being evacuated from the tank through the aspirate port, wherein the fill port is separate from the aspirate port.

13. The system according to claim 1 or method according to claim 2, further comprising a fluid input line for delivering the fluid to the at least one manifold for introducing the fluid into the tank and a vacuum aspiration line for removing fluid from the at least one manifold for drawing the fluid from the tank.

14. The system or method according to claim 13, wherein the fluid input line and the vacuum aspiration line are also used to wash the wells.

15. The system according to claim 1 or method according to claim 2, wherein the control system is programmed to control washing of the wells and cleaning of the pipes.

16. The system or method of claim 15, wherein the control system is programmed to automatically control cleaning of the pipes with a preprogrammed cleaning cycle.

17. The system according to claim 1 or method according to claim 2, wherein the plate is a matrix of wells.

## Patentansprüche

1. Plattenwaschsystem zum Waschen der Wells einer Platte, umfassend: einen Wellplattenträgermechanismus (111), der eine Waschposition aufweist;
einen Verteiler (103), der mehrere Röhrchen (102) aufweist, die ausgestaltet sind, sich im Betrieb innerhalb von Wells einer Platte zum Waschen der Wells zu befinden;
einen mit einem Fluid füllbaren Tank (107), der sich unter dem Wellplattenträgermechanismus in der Waschposition befindet; und
ein Mittel zum Bewegen des Verteilers und/oder des Tanks, um die Spitzen der mehreren Röhrchen in dem Tank zu positionieren;
ein Trägermechanismuspositioniersystem (114), um den Trägermechanismus (111) von der Waschposition aus dem Weg zu bewegen, damit die Röhrchen abgesenkt werden können oder der Tank angehoben werden kann, um die Spitzen der Röhrchen in dem Tank zu positionieren;
einen Ultraschallsignalwandler (207), der an dem Tank befestigt ist; und
ein Steuerungssystem (113), das wirksam ist, wenn der Trägermechanismus aus dem Weg ist, um den Verteiler zu senken oder den Tank zu heben, um das Fluid in den Tank abzugeben, und um den Ultraschallsignalwandler zu aktivieren, wenn Spitzen der mehreren Röhrchen in das Fluid getaucht sind, um das Fluid in dem Tank in Schwingung zu versetzen.

2. Verfahren zum Säubern von Röhrchen eines Plattenwaschsystems, umfassend:
Bereitstellen des Waschsystems, das wenigstens einen Verteiler, mit mehreren Röhrchen, die ausgestaltet sind, sich im Betrieb innerhalb von Wells einer Platte zum Waschen der Wells zu befinden, einen Tank, einen Ultraschallsignalwandler, der an dem Tank befestigt ist, und ein Steuerungssystem aufweist;
Waschen der Wells der Platte, wobei die Platte durch einen Wellplattenträgermechanismus in einer Waschposition gehalten wird, wobei der Tank unter dem Wellplattenträgermechanismus angeordnet ist;
Bewegen der Platte von der Waschposition aus dem Weg, wobei ein Trägermechanismuspositioniersystem verwendet wird, damit die Röhrchen, abgesenkt werden können oder der Tank angehoben werden kann, um die Spitzen der Röhrchen in dem Tank zu positionieren;
wenn der Trägermechanismus aus dem Weg ist, Senken des wenigstens einen Verteilers oder Heben des Tanks durch das Steuerungssystem, so dass Spitzen der mehreren Röhrchen in dem Tank positioniert sind;
Füllen des Tanks mit einem Fluid; und
Aktivieren des Ultraschallsignalwandlers, um das Fluid in dem Tank in Schwingung zu versetzen.

3. System nach Anspruch 1 oder Verfahren nach Anspruch 2, bei welchem der Verteiler ein Abgabeverteiler (102) ist, der mehrere Abgaberöhrchen (102) aufweist, um eine Waschlösung (8) zum Waschen der Wells bereitzustellen.

4. System nach Anspruch 1 oder Verfahren nach Anspruch 2, bei welchem das Steuerungssystem automatisch die Bewegung von dem wenigstens einen Verteiler und/oder dem Tank steuert, so dass die mehreren Röhrchen in dem Tank positioniert sind, und automatisch den Ultraschallsignalwandler aktiviert, um das Fluid in dem Tank in Schwingung zu versetzen.

5. System oder Verfahren nach Anspruch 4, bei welchem die Platte eine Mikrotiterplatte ist.

6. System nach Anspruch 1 oder Verfahren nach Anspruch 2, bei welchem die mehreren Röhrchen mehrere Abgaberöhrchen (102) umfassen, wobei das Steuerungssystem die Abgaberöhrchen so steuert, dass die Abgaberöhrchen das Fluid in dem Tank abgeben.

7. System oder Verfahren nach Anspruch 6, bei welchem die mehreren Röhrchen des Weiteren mehrere Absaugröhrchen (104) umfassen, so dass die Absaugröhrchen das Fluid aus dem Tank entleeren.

8. System nach Anspruch 1 oder Verfahren nach Anspruch 2, bei welchem das Steuerungssystem programmiert ist, vorzugsweise automatisch wenigstens eine der folgenden Arbeiten zu steuern:
Fluidwechsel, die Dauer des Eintauchens der Röhrchen und die Zeiten, wenn die Röhrchen gesäubert werden.

9. System nach Anspruch 1 oder Verfahren nach Anspruch 2, bei welchem, wenn der Ultraschallsignalwandler aktiviert ist, eine Spannung mit einer Amplitude und einer Frequenz an den Ultraschallsignalwandler angelegt wird, so dass er den Tank in Schwingung versetzt und im gesamten Fluid das Bilden und Zusammenfallen kleiner Blasen bewirkt, wodurch die Röhrchen gesäubert werden.

10. System oder Verfahren nach Anspruch 9, bei welchem die angelegte Spannung 30 bis 300 Volt beträgt und eine Frequenz von 40 bis 100 kHz aufweist.

11. System oder Verfahren nach Anspruch 7, bei welchem das Steuerungssystem so programmiert ist, dass es vorzugsweise automatisch ein Entleeren des Tanks steuert.

12. System oder Verfahren nach Anspruch 11, bei welchem der Tank eine Füllöffnung und eine Absaugöffnung aufweist, wobei das Fluid in den Tank durch die Füllöffnung eingeführt wird und das Fluid von dem Tank durch die Absaugöffnung entleert wird, wobei die Füllöffnung von der Absaugöffnung getrennt ist.

13. System nach Anspruch 1 oder Verfahren nach Anspruch 2, des Weiteren umfassend eine Fluideingangsleitung zum Liefern des Fluids an den wenigstens einen Verteiler, um das Fluid in den Tank einzuführen, und eine Vakuumabsaugleitung zum Entfernen des Fluids aus dem wenigstens einen Verteiler, um das Fluid aus dem Tank zu fördern.

14. System oder Verfahren nach Anspruch 13, bei welchem die Fluideingangsleitung und die Vakuumabsaugleitung auch zum Waschen der Wells verwendet werden.

15. System nach Anspruch 1 oder Verfahren nach Anspruch 2, bei welchem das Steuerungssystem programmiert ist, das Waschen der Wells und das Säubern der Röhrchen zu steuern.

16. System oder Verfahren nach Anspruch 15, bei welchem das Steuerungssystem programmiert ist, automatisch Säubern der Röhrchen mit einem vorprogrammierten Säuberungszyklus zu steuern.

17. System nach Anspruch 1 oder Verfahren nach Anspruch 2, bei welchem die Platte eine Matrix aus Wells ist.

## Revendications

1. Système de lavage de plaque destiné à laver les puits d'une plaque, comprenant : un mécanisme de support (111) de plaque à puits ayant une position de lavage ;
un collecteur (103) ayant une pluralité de tuyaux (102) configurés, en service, pour être pourvus dans des puits d'une plaque afin de laver les puits ;
un réservoir (107) qui peut être rempli par un liquide situé sous le mécanisme de support de plaque à puits dans la position de lavage ; et
des moyens pour déplacer au moins un parmi le collecteur et le réservoir pour positionner les extrémités de la pluralité des tuyaux dans le réservoir ;
un système de positionnement (114) du mécanisme de support destiné à écarter le mécanisme de support (111) de la position de lavage afin de permettre aux tuyaux d'être abaissés ou au réservoir d'être levé pour positionner les extrémité des tuyaux dans le réservoir ;
un transducteur à ultrasons (207) équipant le réservoir ; et
un système de commande (113), pouvant fonctionner lorsque le mécanisme de support est écarté pour abaisser le collecteur ou soulever le réservoir, pour distribuer le liquide dans le réservoir et lorsque des extrémités desdites pluralités de tuyaux sont immergées dans le liquide pour activer le transducteur à ultrasons pour faire vibrer le liquide dans le réservoir.

2. Procédé de nettoyage de tuyaux d'un système de lavage de plaques, comportant le fait :
de fournir le système de lavage ayant au moins un collecteur comprenant une pluralité de tuyaux configurés, en service, pour être prévus dans des puits d'une plaque afin de laver les puits, un réservoir, un transducteur à ultrasons équipant le réservoir, et un système de commande ;
de laver les puits de la plaque pendant que la plaque est soutenue par un mécanisme de support de plaque à puits dans une position de lavage, le réservoir étant placé sous le mécanisme de support de plaque à puits ;
d'écarter la plaque de la position de lavage en utilisant un système de positionnement du mécanisme de support pour permettre aux tuyaux d'être abaissés ou au réservoir d'être soulevé afin de positionner les extrémités des tuyaux dans le réservoir ;
le mécanisme de support étant écarté, le système de commande abaissant l'au moins un collecteur ou soulevant le réservoir de sorte que des extrémités de la pluralité de tuyaux soient positionnées dans le réservoir ;
de remplir le réservoir avec un liquide ; et
d'activer le transducteur à ultrasons afin de faire vibrer le liquide dans le réservoir.

3. Système de la revendication 1 ou procédé de la revendication 2, dans lequel le collecteur est un collecteur de distribution (102) ayant une pluralité de tuyaux de distribution (102) pour acheminer une solution de lavage (8) pour laver les puits.

4. Système de la revendication 1 ou procédé de la revendication 2, dans lequel le système de commande commande automatiquement un mouvement d'au moins un parmi l'au moins un collecteur et le réservoir de sorte que la pluralité de tuyaux soient positionnés dans le réservoir, et active automatiquement le transducteur à ultrasons afin de faire vibrer le liquide dans le réservoir.

5. Système ou procédé de la revendication 4, dans lequel ladite plaque est une plaque de microtitration.

6. Système de la revendication 1 ou procédé de la revendication 2, dans lequel ladite pluralité de tuyaux comporte une pluralité de tuyaux de distribution (102), dans lequel ledit système de commande commande les tuyaux de distribution de sorte que les tuyaux de distribution distribuent le liquide dans le réservoir.

7. Système ou procédé de la revendication 6, dans lequel la pluralité de tuyaux comporte en outre une pluralité de tuyaux d'aspiration (104) de sorte que les tuyaux d'aspiration évacuent le liquide du réservoir.

8. Système de la revendication 1 ou procédé de la revendication 2, dans lequel le système de commande est programmé pour commander, de préférence automatiquement, au moins l'une des opérations suivantes : des changements de liquide, la durée de trempage des tuyaux et les moments où les tuyaux sont nettoyés.

9. Système de la revendication 1 ou procédé de la revendication 2, dans lequel lorsque le transducteur à ultrasons est activé, une tension d'amplitude et de fréquence est appliquée au transducteur à ultrasons afin de faire vibrer le réservoir et d'amener des petites bulles à se former et à imploser à travers le liquide nettoyant ainsi les tuyaux.

10. Système ou procédé de la revendication 9, dans lequel la tension appliquée est de 30 à 300 Volts et a une fréquence de 40 à 100 kHz.

11. Système ou procédé de la revendication 7, dans lequel le système de commande est programmé pour commander, de préférence automatiquement, l'évacuation du réservoir.

12. Système ou procédé de la revendication 11, dans lequel ledit réservoir comporte un orifice de remplissage et un orifice d'aspiration, ledit liquide étant introduit dans le réservoir à travers l'orifice de remplissage et ledit liquide étant évacué du réservoir par l'orifice d'aspiration, dans lequel l'orifice de remplissage est séparé de l'orifice d'aspiration.

13. Système selon la revendication 1 ou procédé selon la revendication 2, comprenant en outre une ligne d'entrée de liquide pour distribuer le liquide à l'au moins un collecteur en vue d'introduire le liquide dans le réservoir et une ligne aspiration sous vide pour retirer le liquide de l'au moins un collecteur afin de chasser le liquide du réservoir.

14. Système ou procédé selon la revendication 13, dans lequel la ligne d'entrée de liquide et la ligne d'aspiration sous vide sont également utilisées pour laver les puits.

15. Système selon la revendication 1 ou procédé selon la revendication 2, dans lequel le système de commande est programmé pour commander le lavage des puits et le nettoyage des tuyaux.

16. Système ou procédé de la revendication 15, dans lequel le système de commande est programmé pour commander automatiquement le nettoyage des tuyaux par le biais d'un cycle de nettoyage préprogrammé.

17. Système selon la revendication 1 ou procédé selon la revendication 2, dans lequel la plaque est une matrice de puits.
